# EUROPEAN PATENT APPLICATION

(11) **EP 2 432 222 A1**
(43) Date of publication of application: **21.03.2012**
(21) Application number: 10774949.1
(22) Date of filing: 13.05.2010
(51) Int. Cl.: H04N 7/167, H04H 20/61, H04H 60/15, H04H 60/23, H04H 60/92

(54) **TRANSMISSION DEVICE AND TRANSMISSION METHOD, AND RECEPTION DEVICE AND RECEPTION METHOD**

(30) Priority: 13.05.2009 JP 2009116097
(71) Applicant: Sony Corporation, Tokyo 108-0075 (JP)
(72) Inventor: KITAZATO Naohisa, Tokyo 108-0075 (JP); HATAKEYAMA Izumi, Tokyo 108-0075 (JP); OBAYASHI Masayuki, Tokyo 108-0075 (JP)
(74) Representative: Körber, Martin Hans
(86) International application number: PCT/JP2010/058078
(87) International publication number: WO 2010/131692

(57) **Abstract**

The present invention relates to a transmitting apparatus and transmitting method as well as a receiving apparatus and receiving method configured to be able to recognize only channel selection information for digital broadcasting that is viewable at the receiving end.

A communication unit 79 transmits a viewing license and channel selection information to a receiving apparatus that receives digital broadcasting. The viewing license includes a license expiration date given as terms of use for content of digital broadcasting, and a scramble key for unlocking scrambling applied to content. The channel selection information is information related to digital broadcasting channel selection. The present invention can be applied to a server that communicates with a receiving terminal which receives digital broadcasting, for example.

## Description

### Technical Field

The present invention relates to a transmitting apparatus and transmitting method, as well as to a receiving apparatus and receiving method, and more particularly relates to a transmitting apparatus and transmitting method as well as a receiving apparatus and receiving method configured to be able to recognize only channel selection information for digital broadcasting that is viewable at the receiving end.

### Background Art

Recently, digital terrestrial broadcasting in the UHF (Ultra High Frequency) band is being carried out. The physical channels of digital terrestrial broadcasting are divided into plural segments (13 segments for digital terrestrial broadcasting in Japan). Of these, broadcasting intended for mobile terminals (hereinafter called 1seg) is conducted in the band for one segment. Additionally, broadcasting intended for stationary terminals such as television receivers, etc. is conducted in the bands for the remaining 12 segments (see PTL 1, for example).

With digital terrestrial broadcasting, in practice there exist many empty channels other than the channels over which digital terrestrial broadcasting is conducted in respective regions among the channels 13 to 52 in the UHF band. For this reason, methods of effectively utilizing such empty channels are being investigated.

One promising method that effectively utilizes empty channels is a method that conducts multi-channel community broadcasting over empty channels. Herein, multi-channel community broadcasting is broadcasting in one-segment units multilaterally conducted by utilizing a plurality of logical channels in a limited region. The one segment referred to herein is of a plurally divided band for a single digital terrestrial broadcasting channel. Hereinafter, multi-channel community broadcasting will be simply referred to as community broadcasting.

Meanwhile, with digital terrestrial broadcasting intended for stationary terminals, it is possible to apply reception restrictions by using a CAS (Conditional Access System) format. However, although a CAS format is not being used for 1seg broadcasting, it is anticipated that a CAS format similar to that of broadcasting intended for stationary terminals will be adopted in the case where reception restrictions become necessary. Thus, hereinafter, such a case will be explained.

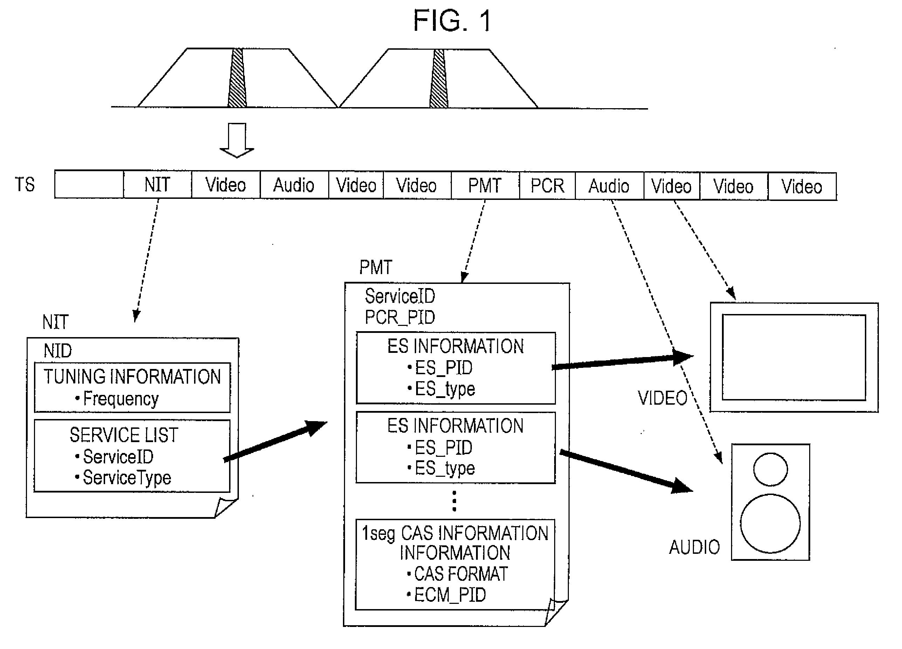

Fig. 1 is a diagram explaining a CAS format for 1seg broadcasting.

NIT is a table containing information regarding frequency information for individual broadcasting services in order to tune the carrier upon which specific broadcasting services are transmitted, and corresponding services. More specifically, as illustrated in Fig. 1, a reception-restricted 1seg broadcasting NIT (Network Information Table) is composed of the network ID (NID) for the 1seg broadcasting, tuning information indicating the frequency, and a service list of broadcasting services, etc. Herein, the network ID is an ID unique to the network. The service list is composed of a service ID (ServiceID) and a service type (ServiceType) for a broadcasting service, etc. The service ID is an ID unique to a broadcasting service, while the service type is the type of broadcasting service (television broadcast, radio broadcast, etc.).

A receiving terminal that receives 1seg broadcasting acquires a service ID from this NIT, and acquires a PMT (Program Map Table) corresponding to that service ID. Herein, a PMT is information that manages the content constituting a broadcasting service. More specifically, as illustrated in Fig. 1, a PMT is composed of a service ID, a PCR_PID, ES information on ESs (Elementary Streams) constituting the broadcasting service for 1seg broadcasting corresponding to that service ID, and 1seg CAS information, which is CAS information for that broadcasting service, etc.

The PCR_PID is an ID unique to a PCR (Program Clock Reference) packet (hereinafter called a packet ID). Also, ES information (Elementary stream information) is composed of an ES_PID, which is the packet ID for an ES (Elementary stream), and an ES_type, which is the type of the ES, etc. 1seg CAS information is composed of a CAS format and an ECM_PID, which is the packet ID for ECM (Entitlement Control Message) packet, etc. An ECM packet is a packet of information shared by all users and including an encrypted scramble key as information related to the scramble key used by that CAS format. Herein, a key for decrypting the encrypted scramble key is included in an EMM (Entitlement Management Message) packet, which is a packet of information individual to each user.

EMM packets are encrypted and included in a digital terrestrial broadcast. An EMM packet can be acquired by decrypting using a key included in an IC (Integrated Circuit) card, etc. issued as a result of the user of a receiving terminal conducting registration for receiving reception-restricted broadcasting (hereinafter called reception registration).

Consequently, the user of a receiving terminal first conducts reception registration and acquires an IC card, etc. that includes a key for unlocking the encryption on an EMM packet. Then, the user uses that IC card to cause the receiving terminal to acquire an EMM packet. The receiving terminal unlocks the scrambling of the encrypted scramble key included in an ECM with the key included in that EMM packet. Using the scramble key obtained as a result, the scrambling of the 1seg broadcasting ESs corresponding to ES information included in a PMT is unlocked. As a result, the video and audio of reception-restricted 1seg broadcasting can be played back.

### Citation List

### Patent Literature

PTL 1: Japanese Unexamined Patent Application Publication No. 2007-329847

### Summary of Invention

### Technical Problem

As above, with a conventional CAS format, since the frequency, etc. of reception-restricted digital terrestrial broadcasting is stated in the NIT, unviewable digital terrestrial broadcasting having reception restrictions is recognized in a receiving terminal that is not compatible with digital terrestrial broadcasting having reception restrictions.

The present invention, being devised in light of such circumstances, is configured to be able to recognize only channel selection information for digital broadcasting that is viewable at the receiving end. Solution to Problem

A transmitting apparatus of a first aspect of the present invention is a transmitting apparatus comprising acquiring means for acquiring a license that includes terms of use for content of digital broadcasting used at a receiving apparatus that receives the digital broadcasting, and transmitting means for transmitting the license that includes terms of use for content of digital broadcasting to the receiving apparatus that receives the digital broadcasting, wherein the license includes channel selection information for receiving the content of the digital broadcasting.

A transmitting method of a first aspect of the present invention is a transmitting method including steps wherein a transmitting apparatus acquires a license that includes terms of use for content of digital broadcasting used at a receiving apparatus that receives the digital broadcasting, and transmits the license that includes terms of use for content of digital broadcasting to the receiving apparatus that receives the digital broadcasting, wherein the license includes channel selection information for receiving the content of the digital broadcasting.

In a first aspect of the present invention, a license that includes terms of use for content of digital broadcasting used at a receiving apparatus that receives the digital broadcasting is acquired, and the license that includes the terms of use for content of digital broadcasting is transmitted to the receiving apparatus that receives the digital broadcasting. Furthermore, channel selection information for receiving the content of the digital broadcasting is included in the license.

A receiving apparatus of a second aspect of the present invention is a receiving apparatus comprising license receiving means for receiving, via a network, a license that includes terms of use and channel selection information for content of digital broadcasting, content receiving means for selecting the channel of the digital broadcasting on the basis of the channel selection information included in the license, and receiving the content, and playback means for playing back the content of the digital broadcasting on the basis of the license.

A receiving method of a second aspect of the present invention is a receiving method including steps wherein a receiving apparatus receives, via a network, a license that includes terms of use and channel selection information for content of digital broadcasting, selects the channel of the digital broadcasting on the basis of the channel selection information included in the license, and receives the content, and plays back the content of the digital broadcasting on the basis of the license.

In a second aspect of the present invention, a license that includes terms of use and channel selection information for content of digital broadcasting is received via a network, the channel of the digital broadcasting is selected on the basis of the channel selection information included in the license, content is received, and the content of the digital broadcasting is played back on the basis of the license.

### Advantageous Effects of Invention

As above, according to the present invention, only channel selection information for digital broadcasting that is viewable at the receiving end can be recognized.

### Brief Description of Drawings

[Fig. 1] Fig. 1 is a diagram explaining a 1seg broadcasting CAS format.
[Fig. 2] Fig. 2 is a diagram illustrating an exemplary configuration of a first embodiment of a signal transmitting/receiving system to which the present invention has been applied.
[Fig. 3] Fig. 3 is a diagram explaining a licensing format.
[Fig. 4] Fig. 4 is a block diagram illustrating an exemplary detailed configuration of the receiving terminal in Fig. 2.
[Fig. 5] Fig. 5 is a block diagram illustrating an exemplary detailed configuration of the server in Fig. 2.
[Fig. 6] Fig. 6 is a flowchart explaining a viewing license acquisition process in a signal transmitting/receiving system.
[Fig. 7] Fig. 7 is a diagram illustrating an exemplary structure of a viewing license.
[Fig. 8] Fig. 8 is a diagram explaining a scramble key included in a viewing license.
[Fig. 9] Fig. 9 is a diagram explaining a method of playing back pay community broadcasting at a receiving terminal.
[Fig. 10] Fig. 10 is a diagram illustrating an exemplary configuration arrangement of community CAS information.
[Fig. 11] Fig. 11 is a flowchart explaining a pay community broadcasting channel selection process.
[Fig. 12] Fig. 12 is a diagram illustrating an exemplary configuration of a second embodiment of a signal transmitting/receiving system to which the present invention has been applied.
[Fig. 13] Fig. 13 is a block diagram illustrating an exemplary detailed configuration of the receiving terminal in Fig. 12.
[Fig. 14] Fig. 14 is a block diagram illustrating an exemplary detailed configuration of the reader/writer in Fig. 12.
[Fig. 15] Fig. 15 is a block diagram illustrating an exemplary hardware configuration of a personal computer.

### Description of Embodiments

### <First embodiment>

### [Exemplary configuration of first embodiment of signal transmitting/receiving system]

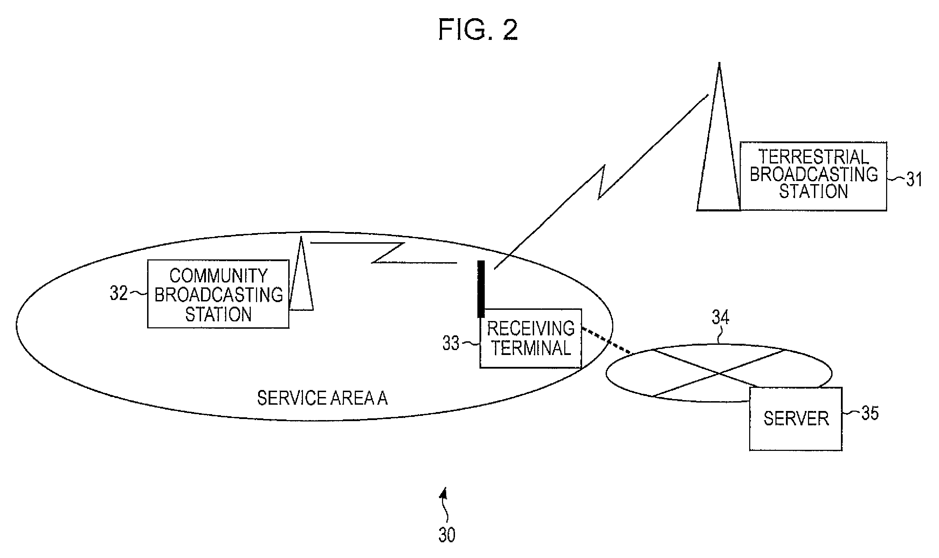

Fig. 2 is a diagram illustrating an exemplary configuration of a first embodiment of a signal transmitting/receiving system to which the present invention has been applied.

The signal transmitting/receiving system 30 in Fig. 2 is composed of a terrestrial broadcasting station 31, a community broadcasting station 32, a receiving terminal 33, a network 34, and a server 35.

The terrestrial broadcasting station 31 conducts digital terrestrial broadcasting, including free 1seg broadcasting, with a digital terrestrial broadcast wave. The community broadcasting station 32 conducts pay community broadcasting receivable only in a service area A in the central segment of an empty channel on a digital terrestrial broadcast wave. This pay community broadcasting is reception-restricted by a licensing format, which is a given CAS format.

The receiving terminal 33 is a mobile terminal able to receive free 1seg broadcasting or pay community broadcasting transmitted in the central segment of a digital terrestrial broadcast wave. Consequently, as illustrated in Fig. 2, in the case where a user possessing a receiving terminal 33 is in the service area A, the receiving terminal 33 is able to receive pay community broadcasting from the community broadcasting station 32 and free 1seg broadcasting.

Also, the receiving terminal 33 wirelessly communicates with the server 35 via the network 34. For example, in the case where a Wi-Fi-certified terminal is used as the receiving terminal 33, the receiving terminal 33 wirelessly communicates with the server 35 in conformity to IEEE (Institute of Electrical and Electronic Engineers) 802.11. Herein, the receiving terminal 33 may also wirelessly communicate with the server 35 by taking a mobile phone network as the network 34.

The receiving terminal 33, by wirelessly communicating with the server 35, acquires from the server 35 a scramble key for unlocking scrambling applied to content, which is the video data and audio data of pay community broadcasting, etc.

The server 35 wirelessly communicates with the receiving terminal 33 via the network 34 and authenticates the receiving terminal 33. Also, the server 35 transmits a scramble key for pay community broadcasting broadcasted by the community broadcasting station 32 to a valid receiving terminal 33 via the network 34. Additionally, the server 35 conducts a payment process with respect to the receiving terminal 33 for pay community broadcasting corresponding a scramble key transmitted to the receiving terminal 33. This network 34 may also used wired communication rather than just wireless communication. Also, while IP (Internet Protocol) may be used for the transmission protocol, a network using another transmission protocol is also acceptable.

### [Explanation of licensing format]

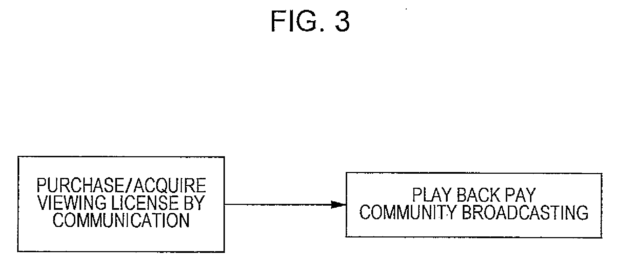

Fig. 3 is a diagram explaining a licensing format.

As illustrated in Fig. 3, with a licensing format, the receiving terminal 33 purchases and acquires a viewing license which includes information such as a scramble key required to play back community broadcasting. Then, the receiving terminal 33 uses the viewing license to play back pay community broadcasting.

### [Exemplary detailed configuration of receiving terminal]

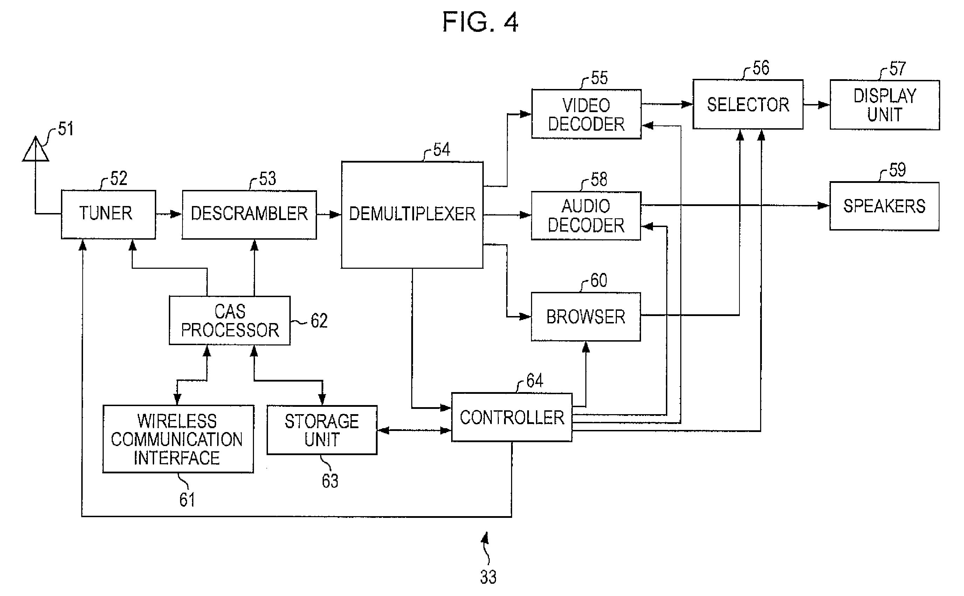

Fig. 4 is a block diagram illustrating an exemplary detailed configuration of the receiving terminal 33 in Fig. 2.

The receiving terminal 33 in Fig. 4 is composed of an antenna 51, a tuner 52, a descrambler 53, a demultiplexer 54, a video decoder 55, a selector 56, a display unit 57, an audio decoder 58, speakers 59, a browser 60, a wireless communication interface 61, a CAS processor 62, a storage unit 63, and a controller 64.

The tuner 52 selects a channel on the basis of tuning information supplied from the controller 64, and sequentially receives the TS (Transport Stream) in the central segment of a digital terrestrial broadcast wave via the antenna 51. In other words, the tuner 52 scans the TS in the central segment of a digital terrestrial broadcast wave.

Also, the tuner 52 selects a channel on the basis of tuning information supplied from the controller 64, and receives a 1seg broadcasting TS on a given logical channel from the terrestrial broadcasting station 31 via the antenna 51. Additionally, the tuner 52 selects a channel on the basis of tuning information supplied from the CAS processor 62, and receives a community broadcasting TS on a given logical channel from the community broadcasting station 32 via the antenna 51. The tuner 52 supplies a received TS to the descrambler 53.

The descrambler 53 uses a scramble key supplied from the CAS processor 62 to unlock scrambling applied to a TS supplied from the tuner 52, and supplies the result to the demultiplexer 54.

The demultiplexer 54 separates a TS supplied from the descrambler 53 into respective information such as video data, audio data, information for displaying using a browser during broadcasting (hereinafter called display control information), and PSI (Program Specific Information). The demultiplexer 54 supplies video data to the video decoder 55 and supplies audio data to the audio decoder 58. Also, the demultiplexer 54 supplies display control information to the browser 60, and supplies the respective information, etc. of the PSI to the controller 64 and the CAS processor 62.

The video decoder 55, following control by the controller 64, decodes video data supplied from the demultiplexer 54 in a format corresponding to the encoding at the terrestrial broadcasting station 31 or the community broadcasting station 32, and supplies the result to the selector 56.

The selector 56, following control by the controller 64, selects video data supplied from the video decoder 55 or video data supplied from the browser 60, and supplies it to the display unit 57. The display unit 57 displays 1seg broadcasting or community broadcasting images, etc. on the basis of video data supplied from the selector 56.

The audio decoder 58, following control by the controller 64, decodes audio data supplied from the demultiplexer 54 in a format corresponding to the encoding at the terrestrial broadcasting station 31 or the community broadcasting station 32, and supplies the result to the speakers 59. The speakers 59 output audio corresponding to audio data supplied from the audio decoder 58 as 1seg broadcasting or community broadcasting audio.

The browser 60 interprets display control information supplied from the demultiplexer 54, generates video data, and supplies it to the selector 56.

The wireless communication interface 61 wirelessly communicates with the server 35 via the network 34. For example, the wireless communication interface 61 transmits a terminal ID, which is an ID unique to a receiving terminal that is supplied from the CAS processor 62 and assigned to the receiving terminal 33, to the server 35 via the network 34. Also, the wireless communication interface 61 receives via the network 34 a viewing license transmitted as a result of an authentication process conducted by the server 35 using a terminal ID, and supplies it to the CAS processor 62.

The CAS processor 62 supplies the terminal ID of the receiving terminal 33 stored in the storage unit 63 to the wireless communication interface 61. Also, the CAS processor 62 supplies a viewing license supplied from the wireless communication interface 61 to the storage unit 63 and causes it to be stored.

Additionally, the CAS processor 62 supplies tuning information included in the viewing license to the tuner 52, and supplies a scramble key to the descrambler 53. From among channel selection information, which is information related to pay community broadcasting channel selection, the CAS processor 62 registers tuning information, a service ID, a service name, a service type, etc. in a channel selection table, which is a table of channel selection information in the storage unit 63.

The storage unit 63 stores a terminal ID, a viewing license, a channel selection table, etc.

The controller 64 sequentially supplies the tuner 52 with tuning information for the central segment of each physical channel of a digital terrestrial broadcast wave. The controller 64 registers the tuning information, service ID, and service type included in the NIT of 1seg broadcasting and the service name, etc. included in the SDT (Service Description Table) supplied from the demultiplexer 54 as a result in the channel selection table in the storage unit. Herein, an SDT is a table containing meta information related to each broadcasting service (such as the service name, for example).

Also, the controller 64 supplies service names registered in a channel selection table stored in the storage unit 63 to the browser 60 and causes a list of those service names (hereinafter called a service list) to be displayed by the display unit 57 according to commands from a user. The user views the service list displayed by the display unit 57 and issues instructions selecting the service name of a viewing target broadcasting service from among the service names listed in the service list. The controller 64, on the basis of the selection instructions, reads out tuning information corresponding to the viewing target service name from the channel selection table, and supplies it to the tuner 52.

Additionally, the controller 64 controls the video decoder 55, the selector 56, the audio decoder 58, and the browser 60 on the basis of respective information in the PSI supplied from the demultiplexer 54. More specifically, the controller 64 controls the video decoder 55 and the audio decoder 58 to synchronize video data output from the video decoder 55 with audio data output from the audio decoder 58, for example.

### [Exemplary detailed configuration of server]

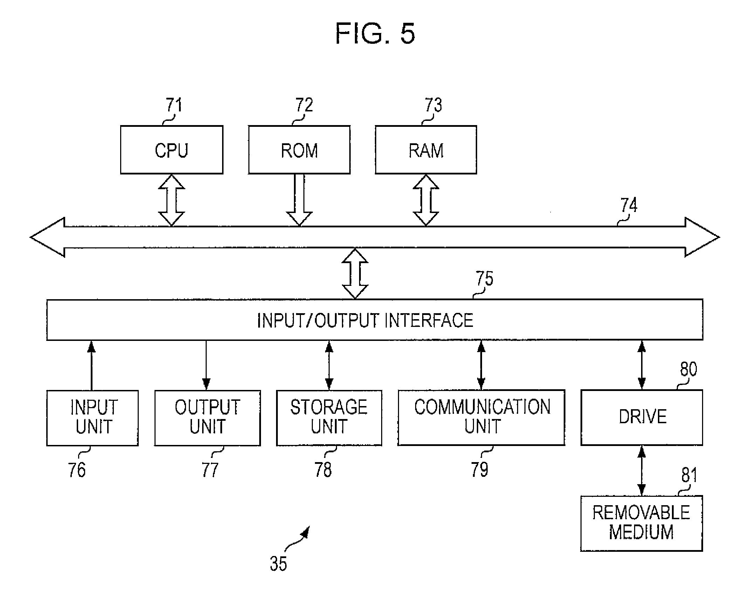

Fig. 5 is a block diagram illustrating an exemplary detailed configuration of the server 35 in Fig. 2.

In the server 35 in Fig. 5, a CPU (Central Processing Unit) 71, ROM (Read Only Memory) 72, and RAM (Random Access Memory) 73 are connected to each other by a bus 74.

An input/output interface 75 is additionally connected to the bus 74. Connected to the input/output interface 75 are an input unit 76, an output unit 77, a storage unit 78, a communication unit 79, and a drive 80.

The input unit 76 comprises a keyboard, mouse, microphone, etc. The output unit 77 comprises a display, speakers, etc. The storage unit 78 comprises a hard disk, non-volatile memory, etc. The communication unit 79 comprises a network interface, etc. The drive 80 drives a removable medium 81 such as a magnetic disk, an optical disc, a magneto-optical disc, or semiconductor memory.

In the server 35 configured as above, various processes are conducted due to the CPU 71 loading a program stored in the storage unit 78 into the RAM 73 via the input/output interface 75 and the bus 74, and executing the program, for example.

More specifically, the CPU 71 conducts an authentication process with respect to the receiving terminal 33 on the basis of a terminal ID received from the receiving terminal 33 via the communication unit 79. Also, the CPU 71, on the basis of the results from the authentication process, controls the communication unit 79 to transmit to the receiving terminal 33 a viewing license for pay community broadcasting which has been transmitted by the community broadcasting station 32 and which is being stored in the storage unit 78. Additionally, the CPU 71 conducts a payment process with respect to a receiving terminal 33 that has received a viewing license, for pay community broadcasting corresponding to that viewing license.

Herein, a program executed by the CPU 71 may for example be provided by being recorded onto a removable medium 81 given as packaged media, etc. Also, a program may be provided via a wired or wireless transmission medium such as a local area network, the Internet, or digital satellite broadcasting.

Also, in the server 35, a program may be installed onto the storage unit 78 via the input/output interface 75 due to the removable medium 81 being loaded into the drive 80. Furthermore, a program may be received by the communication unit 79 via a wired or wireless transmission medium and installed onto the storage unit 78. Otherwise, a program may be installed in advance in the ROM 72 or the storage unit 78.

### [Explanation of viewing license acquisition process by signal transmitting/receiving system]

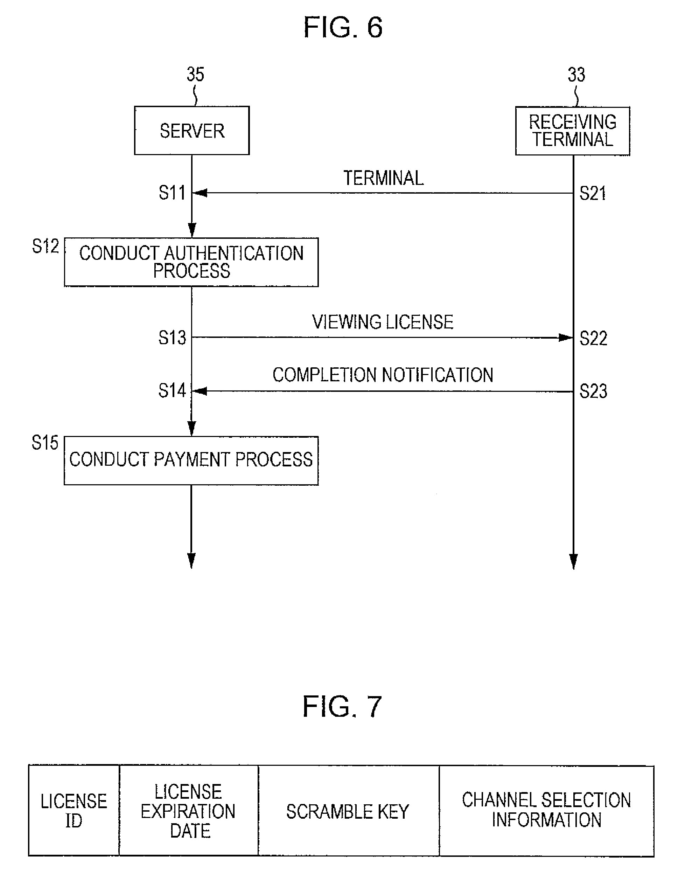

Fig. 6 is a flowchart explaining a viewing license acquisition process in the signal transmitting/receiving system 30.

In a step S21 in Fig. 6, the CAS processor 62 of the receiving terminal 33 (Fig. 4) supplies a terminal ID stored in the storage unit 63 to the wireless communication interface 61, thereby transmitting that terminal ID to the server 35 via the network 34.

In a step S11, the communication unit 79 of the server 35 (Fig. 5) receives the terminal ID transmitted from the receiving terminal 33 via the network 34, and supplies it to the CPU 71. In a step S12, the CPU 71, on the basis of the terminal ID supplied from the communication unit 79, conducts an authentication process to determine whether or not the receiving terminal 33 corresponding to that terminal ID is a valid receiving terminal to which pay community broadcasting can be provided.

In the case where it is determined that the receiving terminal 33 is a valid receiving terminal, in a step S13 the CPU 71 reads out a viewing license from the storage unit 78, and controls the communication unit 79 to transmit that viewing license to the receiving terminal 33. In contrast, in the case where it is determined that the receiving terminal 33 is not a valid receiving terminal, the process ends.

In a step S22, the wireless communication interface 61 of the receiving terminal 33 receives the viewing license transmitted from the server 35, and supplies it to the CAS processor 62. In a step S23, the CAS processor 62 supplies a completion notification regarding reception of the viewing license to the wireless communication interface 61, thereby transmitting that completion notification to the server 35.

In a step S 14, the communication unit 79 of the server 35 receives the completion notification transmitted from the receiving terminal 33, and supplies it to the CPU 71. In a step S15, the CPU 71 conducts a payment process with respect to the receiving terminal 33 for pay community broadcasting corresponding to the viewing license that was transmitted in step S13. The process then ends.

Since the server 35 transmits a viewing license including a scramble key to the receiving terminal 33 in a signal transmitting/receiving system 30 as above, the receiving terminal 33 is able to acquire a scramble key immediately.

Also, in the signal transmitting/receiving system 30, since the minimum functions of a server 35 required for a licensing format are merely authentication functions, viewing license transmission functions, and payment functions, the server 35 can be realized at low cost.

### [Explanation of viewing license]

Fig. 7 is a diagram illustrating an exemplary structure of a viewing license.

The viewing license in Fig. 7 is composed of a license ID which is an ID unique to a viewing license, a license expiration date which is an expiration date given as terms of use for a viewing license, a scramble key, and channel selection information.

The channel selection information is composed of a network ID, a TSID which is an ID unique to a TS, and a pay service list, etc. for pay community broadcasting corresponding to a viewing license. The pay service list is composed of a service ID, a service type, a service name, a tuning frequency, and a PMT packet ID.

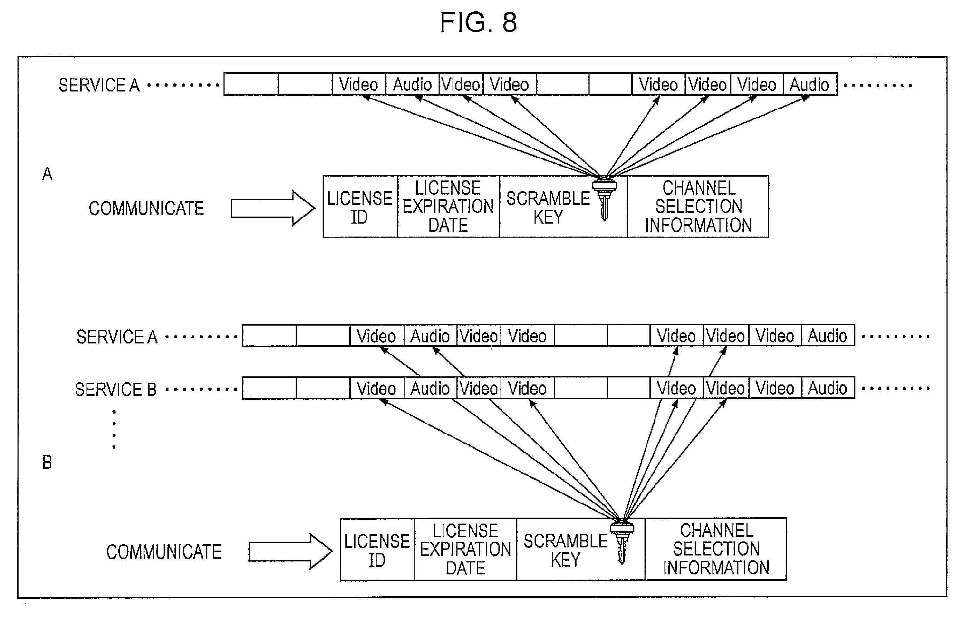

Fig. 8 is a diagram explaining a scramble key included in a viewing license.

For a scramble key included in a viewing license, one key may be set for one broadcasting service in pay community broadcasting, as illustrated by A in Fig. 8, or one key may be set for a plurality of broadcasting services, as illustrated by B in Fig. 8. In the case where one scramble key is set for one broadcasting service, a payment process is conducted in units of single broadcasting services, while in the case where one scramble key is set for a plurality of broadcasting services, a payment process is conducted in units of plural broadcasting services.

Also, it may be configured such that a scramble key is set for a broadcasting service in units of hours, days, or months of pay community broadcasting. In this case, a payment process is conducted in units of hours, days, or months.

### [Explanation of pay community broadcasting playback method]

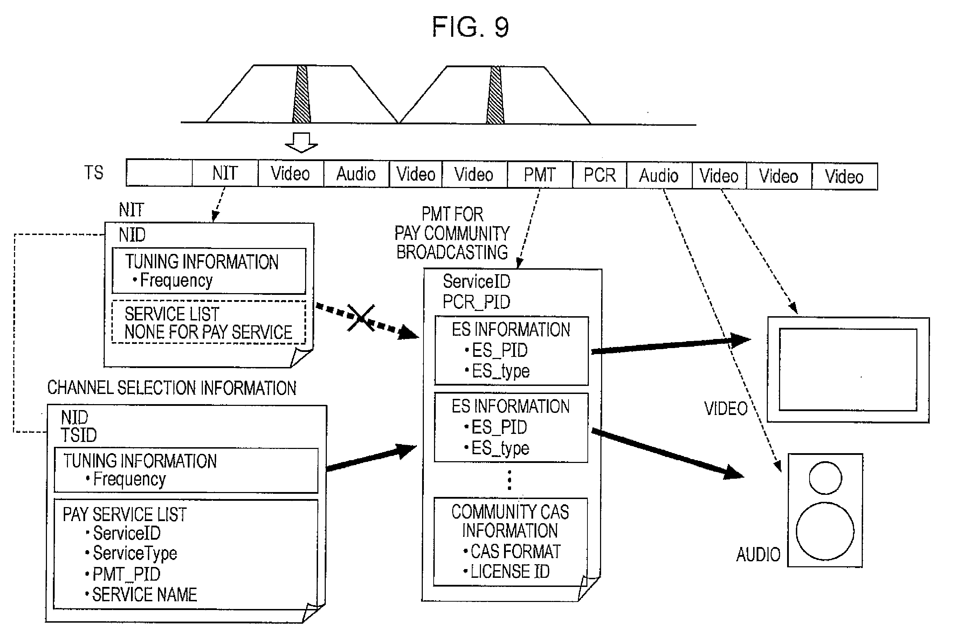

Fig. 9 is a diagram explaining a pay community broadcasting playback method conducted by a receiving terminal 33.

As illustrated in Fig. 9, a network ID and tuning information, etc. are stated in an NIT for pay community broadcasting, whereas a service list is not stated in the NIT. Consequently, the receiving terminal 33 is unable to recognize a pay community broadcasting service ID by simply receiving a digital terrestrial broadcast wave, and is unable to recognize the PMT for that community broadcasting.

On the other hand, the receiving terminal 33 is able to recognize channel selection information for pay community broadcasting by wirelessly communicating with the server 35 and acquiring a viewing license. In other words, channel selection information for viewable free 1seg broadcasting and pay community broadcasting is recognized in the receiving terminal 33.

Meanwhile, since a PMT packet ID is included in the channel selection information, a pay community broadcasting PMT can be recognized. This PMT contains a service ID, a PCR packet ID, ES information for the ESs constituting the broadcasting service of the pay community broadcasting corresponding to that service ID, and community CAS information which is CAS information for that broadcasting service, etc. The community CAS information is composed of a CAS format and information related to the scramble key used by that CAS format, such as a license ID for a viewing license, etc.

Upon recognizing a PMT, the receiving terminal 33 acquires the ESs of pay community broadcasting on the basis of the ES information included in that PMT. Then, the receiving terminal 33 unlocks the scrambling of those ESs with the scramble key corresponding to the license ID included in the PMT. As a result, the video and audio of pay community broadcasting is played back.

As above, since a service list is not stated in a NIT for pay community broadcasting, pay community broadcasting cannot be played back by simply receiving the pay community broadcasting. Consequently, it is possible to prevent an unauthorized receiving terminal that has not acquired a viewing license from playing back a pay community broadcast.

Also, a pay community broadcasting NIT is composed similarly to a 1seg broadcasting NIT, except that a service list is not stated. Consequently, in the case where an existing receiving terminal incompatible with pay community broadcasting receives a digital terrestrial broadcast wave of the present invention, it will simply be unable to play back pay community broadcasting, and will not malfunction. In other words, only channel selection information for viewable free 1seg broadcasting will be recognized in an existing receiving terminal that is incompatible with pay community broadcasting.

### [Exemplary arrangement of community CAS information]

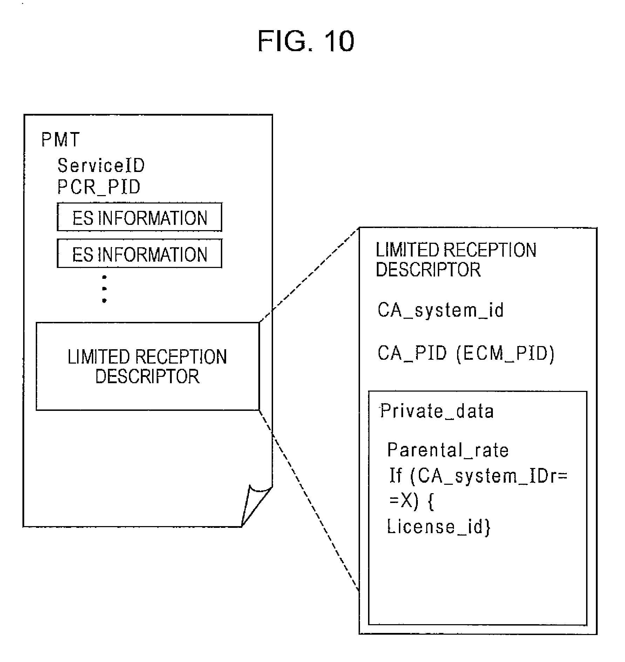

Fig. 10 is a diagram illustrating an exemplary arrangement of community CAS information.

As illustrated in Fig. 10, community CAS information is stated in a limited reception descriptor placed in a PMT, for example. A CAS format ID (CA_system_id), a CAS format packet ID (CA_PID), a private data area (Private_data), etc. are placed in the limited reception descriptor.

The CAS format ID is an ID identifying a CAS format. In the case where the CAS format is a conventional CAS format, or in other words in the case where 1seg CAS information is stated in the limited reception descriptor, an ECM packet ID (ECM_PID) is stated as information related to a scramble key used in that CAS format as the CAS format packet ID. In the case where the CAS format is a licensing format, or in other words in the case where community CAS information is stated in the limited reception descriptor, nothing is stated as the CAS format packet ID. In the case where the CAS format is a licensing format, a license ID (License_id) is stated in the private data area.

As above, since a CAS format ID is placed in the limited reception descriptor, it is possible to contemporaneously operate a conventional CAS format and a licensing format in the signal transmitting/receiving system 30.

Also, in the case where the CAS format is a licensing format, nothing is stated in the CAS format packet ID of the limited reception descriptor, and a license ID is stated in the private data area. Consequently, there is no significant bandwidth consumption of a digital terrestrial broadcast wave due to the CAS format being a licensing format.

### [Explanation of pay community broadcasting channel selection process by receiving terminal]

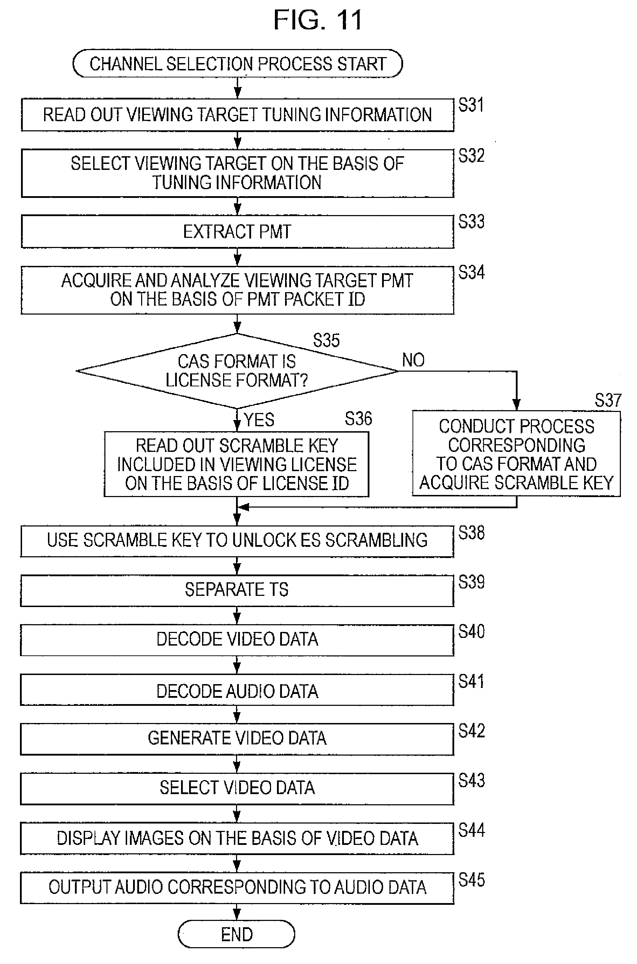

Fig. 11 is a flowchart explaining a pay community broadcasting channel selection process by the receiving terminal 33. This channel selection process is initiated when the user has viewed service names displayed on the display unit 57 and issued instructions selecting the service name of pay community broadcasting given as a viewing target, for example.

In a step S31 in Fig. 11, the controller 64 reads out from the storage unit 63 tuning information registered in a channel selection table in association with the service name selected by the user as tuning information for the viewing target, and supplies it to the tuner 52.

In a step S32, the tuner 52 selects the viewing target pay community broadcasting on the basis of a frequency indicating by the tuning information supplied from the controller 64. In so doing, supply of the TS of the viewing target to the demultiplexer 54 via the descrambler 53 is initiated.

In a step S33, the demultiplexer 54 separates the TS supplied from the tuner 52 via the descrambler 53 and extracts a PMT. The demultiplexer 54 supplies that PMT to the CAS processor 62 and the controller 64.

In a step S34, the CAS processor 62, on the basis of the PMT packet ID included in the channel selection information of the viewing license stored in the storage unit 63, acquires and analyzes the viewing target PMT from the PMT supplied from the demultiplexer 54.

In a step S35, the CAS processor 62 determines whether or not the CAS format stated in the limited reception descriptor of the viewing target PMT is a licensing format. In the case where it is determined in step S35 that the CAS format is a licensing format, the process proceeds to a step S36.

In step S36, the CAS processor 62, on the basis of a license ID stated in the private data area of the viewing target PMT, reads out a scramble key included in the viewing license corresponding to that license ID from the storage unit 63. The scramble key included in a viewing license acquired in advance via the network 34 is stored in the storage unit 63. Then, the CAS processor 62 supplies that scramble key and the packet IDs of the ESs stated in the viewing target PMT to the descrambler 53, and advances the process to a step S38.

In contrast, in the case where it is determined in step S35 that the CAS format is not a licensing format, in step S37 the CAS processor 62 conducts processing corresponding to that CAS format and acquires a scramble key. Then, the CAS processor 62 supplies that scramble key and the packet IDs of the ESs stated in the viewing target PMT to the descrambler 53, and advances the process to step S38.

In step S38, the descrambler 53 uses the scramble key supplied from the CAS processor 62 to unlock the scrambling of the ESs corresponding to the packet IDs supplied from the CAS processor 62. In so doing, the scrambling applied to the video data and audio data of the viewing target TS is unlocked. The descrambled TS is supplied to the demultiplexer 54.

In a step S39, the demultiplexer 54 separates the TS supplied from the descrambler 53 into video data, audio data, display control information, and the respective information, etc. of the PSI. The demultiplexer 54 supplies the video data to the video decoder 55 and supplies the audio data to the audio decoder 58. Also, the demultiplexer 54 supplies the display control information to the browser 60, and supplies the respective information, etc. of the PSI to the controller 64 and the CAS processor 62.

In a step S40, the video decoder 55, following control by the controller 64, decodes the video data supplied from the demultiplexer 54 in a format corresponding to the encoding at the community broadcasting station 32, and supplies the result to the selector 56.

In a step S41, the audio decoder 58, following control by the controller 64, decodes the audio data supplied from the demultiplexer 54 in a format corresponding to the encoding at the community broadcasting station 32, and supplies the result to the speakers 59.

In a step S42, the browser 60 interprets the display control information supplied from the demultiplexer 54, generates video data, and supplies it to the selector 56.

In a step S43, the selector 56, following control by the controller 64, selects the video data supplied from the video decoder 55 or the video data supplied from the browser 60, and supplies it to the display unit 57.

In a step S44, the display unit 57 displays images of the viewing target pay community broadcasting on the basis of the video data supplied from the selector 56.

In a step S45, the speakers 59 output audio corresponding to the audio data supplied from the audio decoder 58 as audio of the viewing target pay community broadcasting. Then, the process ends.

As above, in a signal transmitting/receiving system 30, the functions of a receiving terminal 33 additionally required for a licensing format are basically just the functions of the CAS processor 62. Consequently, the development cost of a receiving terminal 33 for a licensing format can be kept low. Also, in the case where the functions of the CAS processor 62 are realized by a CPU, etc. that realizes other functions, it is not necessary to add new hardware for a licensing format.

### <Second embodiment>

### [Exemplary configuration of second embodiment of signal transmitting/receiving system]

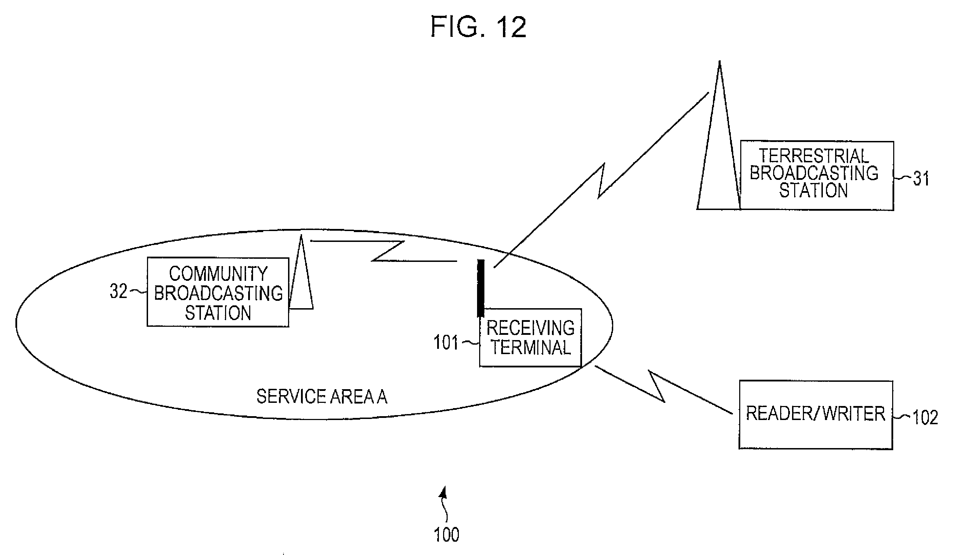

Fig. 12 is a diagram illustrating an exemplary configuration of a second embodiment of a signal transmitting/receiving system to which the present invention has been applied.

Among the configuration elements illustrated in Fig. 12, like signs are given to configuration elements like those in Fig. 2, and repeated description thereof will be reduced or omitted as appropriate.

The configuration of the signal transmitting/receiving system 100 in Fig. 12 differs from the configuration in Fig. 2 primarily in that a receiving terminal 101 and a reader/writer 102 are provided instead of the receiving terminal 33 and the server 35. In the signal transmitting/receiving system 100, a viewing license is exchanged by using a contactless IC (Integrated Circuit) chip included in the receiving terminal 101.

Similarly to the receiving terminal 33, the receiving terminal 101 1 is a mobile terminal able to receive free 1seg broadcasting or pay community broadcasting transmitted in the central segment of a digital terrestrial broadcast wave. Also, the receiving terminal 101 houses a contactless IC chip. In the receiving terminal 101, a viewing license is acquired from a reader/writer 102 due to the contactless IC chip utilizing electromagnetic waves to send and receive data to and from the reader/writer 102 in a contactless manner.

The reader/writer 102 utilizes electromagnetic wave to send and receive data to and from a receiving terminal 101 and authenticate the receiving terminal 101. Also, the reader/writer 102 utilizes electromagnetic waves to transmit, to a valid receiving terminal 101, a scramble key for pay community broadcasting that is broadcast by the community broadcasting station 32. Furthermore, the reader/writer 102 conducts a payment process with respect to the receiving terminal 101 for pay community broadcasting corresponding to a scramble key transmitted to the receiving terminal 101.

A signal transmitting/receiving system 100 configured as above may conceivably involve installing a reader/writer 102 at the entrance to a golf tournament venue, wherein the community broadcasting station 32 transmits pay community broadcasting following the rounds of a specific famous player, for example. In this case, an attendee may pay an entrance fee together with the reception fee for pay community broadcasting following the rounds of a specific famous player by bringing his or her receiving terminal 101 within communicable range of the reader/writer 102 at the entrance, and thereby be able to view that pay community broadcasting. However, it may also be configured such that the community broadcasting station 32 transmits free community broadcasting following highlight scenes of the golf tournament in addition to pay community broadcasting.

### [Exemplary detailed configuration of receiving terminal]

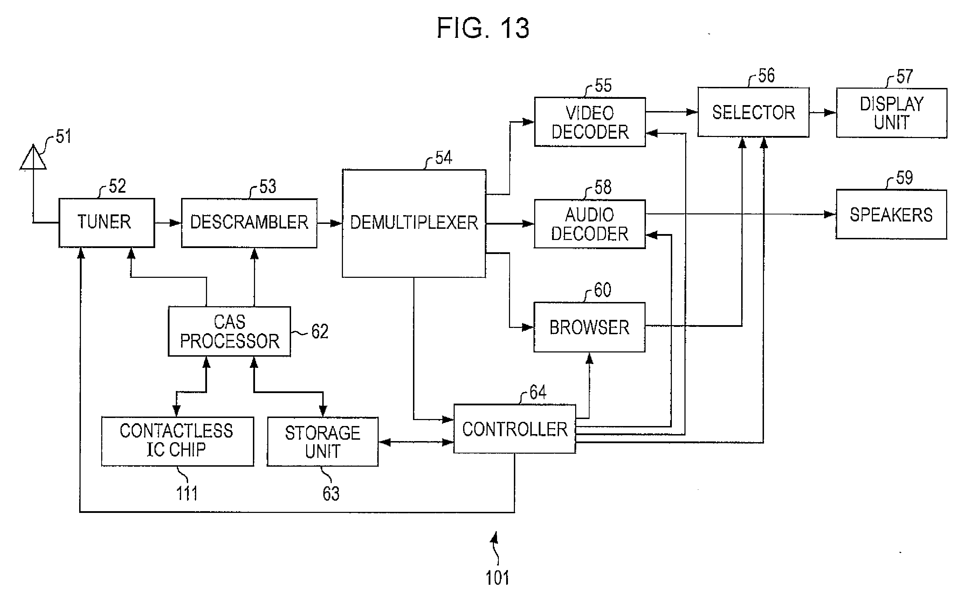

Fig. 13 is a block diagram illustrating an exemplary detailed configuration of the receiving terminal 101 in Fig. 12.

Among the configuration elements illustrated in Fig. 13, like signs are given to configuration elements like those in Fig. 4, and repeated description thereof will be reduced or omitted as appropriate.

The configuration of the receiving terminal 101 in Fig. 13 differs primarily in that a contactless IC chip 111 is provided instead of the wireless communication interface 61.

The contactless IC chip 111 utilizes electromagnetic waves to send and receive data to and from the reader/writer 102. For example, the contactless IC chip 111 modulates the terminal ID of a receiving terminal 33 supplied from the CAS processor 62 in a given modulation format, and utilizes an electromagnetic wave to transmit it to the reader/writer 102. Also, the contactless IC chip 111 receives a viewing license transmitted utilizing an electromagnetic wave as a result of an authentication process using a terminal ID conducted by the reader/writer 102, and demodulates it in a demodulation format corresponding to the modulation format of the reader/writer 102. Then, the contactless IC chip 111 supplies a viewing license obtained as a result of demodulation to the CAS processor 62.

### [Exemplary detailed configuration of reader/writer]

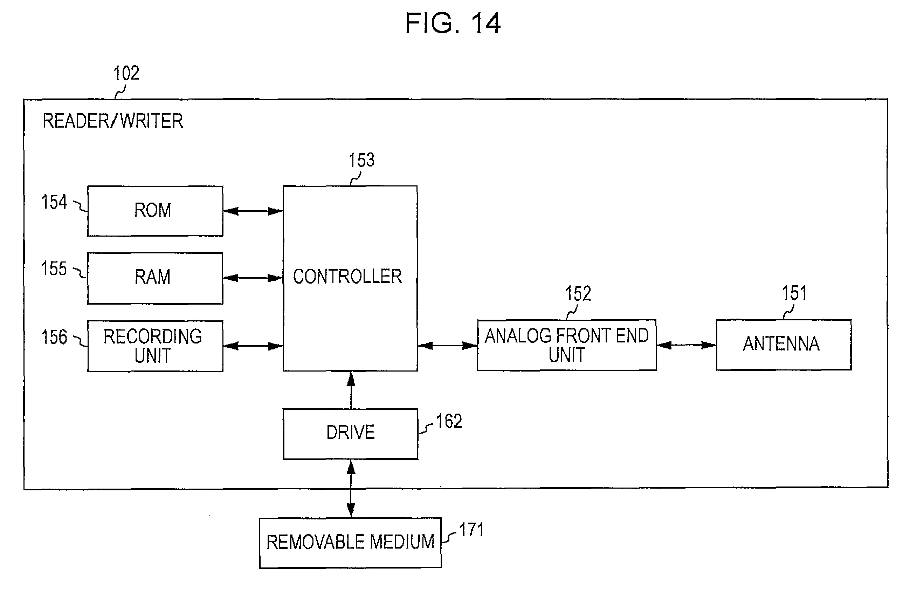

Fig. 14 is a block diagram illustrating an exemplary detailed configuration of the reader/writer 102 in Fig. 12.

The reader/writer 102 in Fig. 14 is composed of an antenna 151, an analog front end unit 152, a controller 153, ROM 154, RAM 155, a recording unit 156, and a drive 162.

The antenna 151 utilizes an electromagnetic wave to transmit a viewing license supplied from the analog front end unit 152 to the receiving terminal 101. Also, the antenna 151 receives an electromagnetic wave transmitted from the receiving terminal 101 and supplies it to the analog front end unit 152.

The analog front end unit 152 generates a carrier wave on the basis of a clock signal of given frequency. The analog front end unit 152 modulates a viewing license supplied from the controller 153 in a given format on the basis of the carrier wave and supplies it to the antenna 151. Also, the analog front end unit 152 demodulates an electromagnetic wave supplied from the antenna 151 with a demodulation format corresponding to the modulation format of the contactless IC chip 111 in the receiving terminal 101, and supplies the terminal ID obtained as a result to the controller 153.

The controller 153 executes various processes by loading a program stored in the recording unit 156 into the RAM 155 and executing the program. Specifically, the controller 153 conducts an authentication process on the basis of a terminal ID supplied from the analog front end unit 152. Also, depending on the result of that authentication process, the controller 153 supplies the analog front end unit 152 with a viewing license, stored in the storage unit 156, for pay community broadcasting transmitted by the community broadcasting station 32. Furthermore, the controller 153 conducts a payment process with respect to a receiving terminal 101 that has received a viewing license, for pay community broadcasting corresponding to that viewing license.

Herein, a program executed by the controller 153 may be provided by being recorded onto a removable medium 171 given as packaged media, for example. Also, a program may be provided via a wired or wireless transmission medium such as a local area network, the Internet, or digital satellite broadcasting.

Also, in the reader/writer 102, a program may be installed to the storage unit 156 by loading a removable medium 171 into the drive 162. Otherwise, a program may be installed in advance to the ROM 154 or the storage unit 156.

Herein, the processing in the signal transmitting/receiving system 100 is similar to the processing in the signal transmitting/receiving system 30 with the exception that a viewing license is provided by a reader/writer 102. For this reason, detailed description of such processing will be omitted.

In the signal transmitting/receiving system 30 (100) discussed above, reception restriction was conducted using a licensing format for community broadcasting, but it may also be configured such that reception restriction is conducted using a licensing format for other 1seg broadcasting. Furthermore, it may also be configured such that reception restriction is conducted only for some community broadcasting or other 1seg broadcasting.

Also, the series of processes of the receiving terminal 33 discussed earlier may be executed by hardware or executed by software. In the case of executing the series of processes by software, a program constituting such software is installed onto a computer. Herein, the term computer includes a computer built into special-purpose hardware, or for example a general-purpose personal computer able to execute various functions by installing various programs thereon, etc.

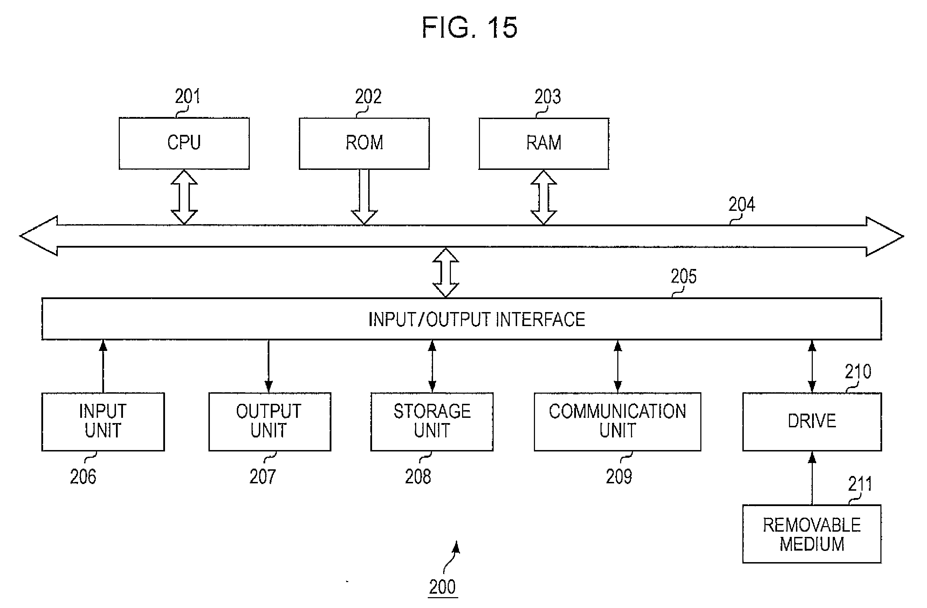

Fig. 15 is a block diagram illustrating an exemplary hardware configuration of a personal computer that executes the series of processes discussed earlier with a program.

In a personal computer 200, a CPU (Central Processing Unit) 201, ROM (Read-Only Memory) 202, and RAM (Random Access Memory) 203 are connected to each other by a bus 204.

An input/output interface 205 is additionally connected to the bus 204. Connected to the input/output interface 205 are an input unit 206, an output unit 207, a storage unit 208, a communication unit 209, and a drive 210.

The input unit 206 comprises a keyboard, mouse, microphone, etc. The output unit 207 comprises a display, speakers, etc. The storage unit 208 comprises a hard disk, non-volatile memory, etc. The communication unit 209 comprises a network interface, etc. The drive 210 drives a removable medium 211 such as a magnetic disk, an optical disc, a magneto-optical disc, or semiconductor memory.

In the personal computer 200 configured as above, the series of process discussed earlier is conducted due to the CPU 201 loading a program stored in the storage unit 208 into the RAM 203 via the input/output interface 205 and the bus 204, and executing the program, for example.

A program executed by the personal computer 200 (CPU 201) may for example be provided by being recorded onto a removable medium 211 given as packaged media, etc. Also, a program may be provided via a wired or wireless transmission medium such as a local area network, the Internet, or digital satellite broadcasting.

In the personal computer 200, a program may be installed to the storage unit 208 via the input/output interface 205 by loading the removable medium 211 into the drive 210. Also, a program may be received by the communication unit 209 via a wired or wireless transmission medium and installed to the storage unit 208. Otherwise, a program may be installed in advance in the ROM 202 or the storage unit 208.

Herein, in the present specification, the steps stating a program stored in a program recording medium may obviously include processes conducted in a time series following the described order, and may also include processes executed in parallel or individually without necessarily being processed in a time series.

Also, in the present specification, a system refers to the totality of an apparatus composed of a plurality of apparatus.

An embodiment of the present invention is not limited to the embodiments discussed above, and various modifications are possible within a scope that does not depart from the principal matter of the present invention.

### Reference Signs List

- 30: signal transmitting/receiving system
- 33: receiving terminal
- 35: server
- 52: tuner
- 53: descrambler
- 61: wireless communication interface
- 71: CPU
- 79: communication unit
- 100: signal transmitting/receiving system
- 101: receiving terminal
- 102: reader/writer
- 111: contactless IC chip
- 151: antenna
- 153: controller

## Claims

1. A transmitting apparatus, comprising:
acquiring means for acquiring a license that includes terms of use for content of digital broadcasting used at a receiving apparatus that receives the digital broadcasting; and
transmitting means for transmitting the license that includes terms of use for content of digital broadcasting to the receiving apparatus that receives the digital broadcasting;
wherein
the license includes channel selection information for receiving the content of the digital broadcasting.

2. The transmitting apparatus according to Claim 1, wherein
the license includes a decryption key for unlocking encryption applied to the content.

3. The transmitting apparatus according to Claim 1, **characterized in that**
the content of the digital broadcasting is transmitted by community broadcasting.

4. The transmitting apparatus according to Claim 1, wherein
the transmitting means transmits the license to the receiving apparatus via a network.

5. A transmitting method, including steps wherein a transmitting apparatus
acquires a license that includes terms of use for content of digital broadcasting used at a receiving apparatus that receives the digital broadcasting, and
transmits the license that includes terms of use for content of digital broadcasting to the receiving apparatus that receives the digital broadcasting,
wherein
the license includes channel selection information for receiving the content of the digital broadcasting.

6. A receiving apparatus, comprising:
license receiving means for receiving, via a network, a license that includes terms of use and channel selection information for content of digital broadcasting;
content receiving means for selecting the channel of the digital broadcasting on the basis of the channel selection information included in the license, and receiving the content; and
playback means for playing back the content of the digital broadcasting on the basis of the license.

7. The receiving apparatus according to Claim 6, wherein
the license includes a decryption key for unlocking encryption applied to the content.

8. The receiving apparatus according to Claim 7, further comprising:
decrypting means for decrypting encrypted content using the decryption key.

9. The receiving apparatus according to Claim 6, **characterized in that**
the received content of the digital broadcasting is transmitted by community broadcasting.

10. The receiving apparatus according to Claim 6, **characterized in that**
the license receiving means receives the license via a network.

11. A receiving method, including steps wherein a receiving apparatus
receives, via a network, a license that includes terms of use and channel selection information for content of digital broadcasting,
selects the channel of the digital broadcasting on the basis of the channel selection information included in the license, and receives the content, and
plays back the content of the digital broadcasting on the basis of the license.
